**Europäisches Patentamt**

**European Patent Office**

**Office européen des brevets**

(19)

(11) Veröffentlichungsnummer: **0 008 401**
**B1**

# EUROPÄISCHE PATENTSCHRIFT
(12)

(45) Veröffentlichungstag der Patentschrift:
27.01.82

(21) Anmeldenummer: 79102835.0

(22) Anmeldetag: 07.08.79

(51) Int. Cl.³: **E 06 B 3/26,** E 06 B 3/78,
B 60 J 5/04, B 61 D 19/02

(54) Tür aus Kunststoff, insbesondere für Schienen- und Strassenfahrzeuge.

(30) Priorität: 21.08.78 DE 2836491

(43) Veröffentlichungstag der Anmeldung:
05.03.80 Patentblatt 80/5

(45) Bekanntmachung des Hinweises auf die Patenterteilung:
27.01.82 Patentblatt 82/4

(84) Benannte Vertragsstaaten:
AT BE CH DE FR GB IT NL

(56) Entgegenhaltungen:
**DE-A-1 655 656**
**DE-A-1 902 878**
**DE-A-1 909 753**
**FR-A-1 569 343**
**FR-A-2 129 225**

(73) Patentinhaber: DUEWAG Aktiengesellschaft, Duisburger
Strasse 145, D-4150 Krefeld 11 (DE)

(72) Erfinder: Bauer, Hans, Neuhauser Strasse 111,
D-5102 Würselen (DE)
Erfinder: Schillings, Dieter, Kölner Strasse 193,
D-4040 Neuss (DE)

BUNDESDRUCKEREI BERLIN

Tür aus Kunststoff, insbesondere für Schienen- und Straßenfahrzeuge

Die Erfindung betrifft eine Tür aus Kunststoff, insbesondere für Schienen- und Straßenfahrzeuge, die einen im Bereich ihrer Kanten angeordneten, aus metallischen Profilen bestehenden Verstärkungsrahmen und eine diesen Rahmen einschließende, aus geschäumtem Kunststoff erstellte, das Blatt der Tür bildende und alle erforderlichen Ausnehmungen für Fenster, Handgriffe usw. enthaltende Ummantelung aufweist.

Es ist bekannt, bei Falttüren ein glattes Außenteil und ein schalenförmiges Innenteil aus glasfaserverstärktem Kunststoff (GFK) zu verwenden, wobei diese Teile einzeln im Preßverfahren erstellt und miteinander durch Kleben verbunden sind. In dem zwischen Innen- und Außenteil gebildeten Hohlraum ist im Bereich des senkrechten äußeren Türholmens eines Türblattes vorzugsweise ein metallisches, hohlträgerartiges Verstärkungsprofil angeordnet, das mit den GFK-Türteilen verklebt ist und dessen Länge sich, je nachdem, ob in einem Türblatt zwei oder nur ein Fensterausschnitt vorgesehen ist, etwa über die Länge des ganzen bzw. halben Türblattes erstreckt. An ein derartiges Verstärkungsprofil sind metallische Querstege angeschlossen, die sich über die Breite des Türblattes erstrecken und damit gleichfalls durch Kleben verbunden sind (DE-A-1 780 307). Darüber hinaus ist es üblich, in den Hohlraum derartiger Türen außer solchen Verstärkungsprofilen noch Schaumstoff zur Aussteifung einzubringen. Wenngleich sich Türen nach dieser vorbekannten Bauweise durch geringes Gewicht und große Steifigkeit auszeichnen, wird als Mangel der verhältnismäßig große Aufwand bei ihrer Fertigung angesehen; dieser Aufwand ist, im weiteren nochmals zusammenfassend dargestellt, durch die Fertigungsschritte — Pressen der glatten und schalenförmigen GFK-Türteile mit jeweils entsprechendem Werkzeug, Aussteifen mit vorher gegen Korrosion zu schützenden Profilen, Verkleben, Kantenbeschneiden, Schleifen und Ausschäumen in einem weiteren Werkzeug — bestimmt. Weiter ist eine Tür für Fahrzeuge gemäß dem Oberbegriff des Patentanspruchs 1 bekannt (DE-A-1 655 656), deren aus geschäumtem Kunststoff erstelltes Türblatt metallische Verstärkungsprofile ummantelt. Diese Profile begrenzen einen im Türblatt vorgesehenen Fensterausschnitt und einen Fensterführungsschacht; dadurch erbringen die Profile eine nur örtliche Stabilisierung für das Türblatt.

Der Erfindung liegt die Aufgabe zugrunde, eine Tür der gattungsgemäßen Art in ihrer Steifigkeit zu verbessern, wobei im Hinblick auf die unterschiedlichen Werkstoffe der Tür — Metall und Kunststoff — aus mechanischen und thermischen Belastungen resultierende Spannungen vermieden werden sollen.

Diese Aufgabe wird erfindungsgemäß dadurch gelöst, daß je zwei benachbarte Elemente des umlaufend ausgebildeten Verstärkungsrahmens im Sinne eines Dehnungsausgleiches verschiebbar miteinander verbunden sind.

In zweckmäßiger Weiterbildung der Erfindung ist vorgesehen, daß der Verstärkungsrahmen vier jeweils aus einem Rechteckrohr gebildete Elemente aufweist, an deren Enden miteinander verschiebbar in Eingriff stehende Halterungen angeordnet sind.

Der verschiebbare Eingriff der Halterungen wird in einfacher Weise nach einer ergänzenden Ausführungsform der Erfindung dadurch erreicht, daß die Halterungen aus jeweils an den Enden der beiden seitlichen Elemente im rechten Winkel zueinander angebrachten Paßstücken und aus jeweils an den Enden des oberen und des unteren Elementes des Verstärkungsrahmens entsprechend angeordneten Aufnahmen für die Paßstücke bestehen.

Die Fertigausrüstung der Tür ist mit geringerem Arbeitsaufwand nach einer nächsten Ausbildung der Erfindung dadurch möglich, daß der Verstärkungsrahmen mit allen für Anbauteile wie Türlager, Handgriffe usw. erforderlichen Befestigungsfuttern versehen ist.

Für den Einsatz der Tür als Schiebetür ist in Weiterbildung der Erfindung vorgesehen, daß der Verstärkungsrahmen unten eine Führungsschiene mit U-förmigem Querschnitt aufweist, wobei diese Schiene auf ihren Außenflächen von der Ummantelung bedeckt ist. Durch diese Bedeckung der Schiene ergibt sich vorteilhaft ein einheitliches, optisch gefälliges Aussehen der Tür.

Um bei einer nur im oberen Bereich mit einem Fenster ausgerüsteten Tür den unteren, fensterlosen Bereich der Ummantelung festigkeitsmäßig noch günstiger zu gestalten und auch gegen mutwillige Beschädigungen zu schützen, sieht eine letzte Ausbildung der Erfindung vor, daß der unterhalb der Fensteröffnung liegende Bereich der Ummantelung eine schaumdurchlässige, vorzugsweise metallische Einlage enthält.

Die mit der Erfindung erzielbaren Vorteile bestehen insbesondere darin, daß das Türblatt durch den umlaufenden Verstärkungsrahmen eine besonders hohe Steifigkeit aufweist und damit den vor allem im Eisenbahnbetrieb gestellten Forderungen, beispielsweise nach möglichst langer wartungsfreier Standzeit, genügt. Zu dieser Standzeit trägt der über die verschiebbare Verbindung der Elemente des Verstärkungsrahmens geschaffene Dehnungsausgleich bei, der bei mechanischen und thermischen Belastungen der Tür ein Entstehen von insbesondere für deren Kunststoff-Türblatt kritischen Spannungen sicher verhindert.

Ein Ausführungsbeispiel der Erfindung, ausgeführt für eine Schiebetür, ist in der Zeichnung dargestellt und wird im folgenden näher beschrieben. Es zeigt

Fig. 1 die Tür in Ansicht mit einem Teilausschnitt,

Fig. 2 einen Verstärkungsrahmen in Ansicht, in gegenüber der Darstellung nach Fig. 1 vergrößertem Maßstab,

Fig. 3 den Schnitt nach der Linie III-III in Fig. 1, in vergrößertem Maßstab,

Fig. 4 den Schnitt nach der Linie IV-IV in Fig. 1, um 90° gedreht, in vergrößertem Maßstab.

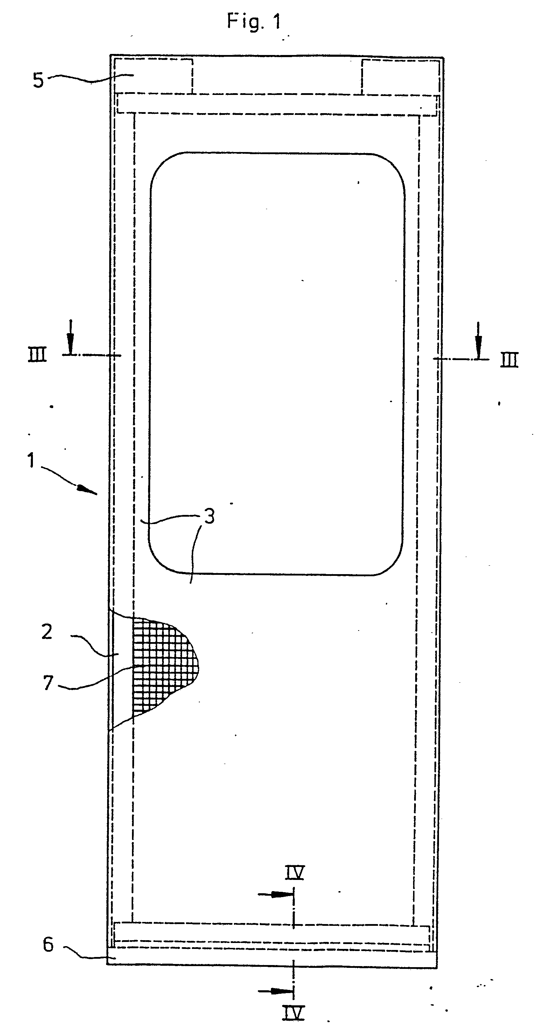

Nach den Fig. 1 bis 4 besteht die Tür 1 im wesentlichen aus dem Verstärkungsrahmen 2 und der aus geschäumtem Kunststoff erstellten Ummantelung 3. Diese schließt nach den Fig. 1, 3 und 4 den Verstärkungsrahmen 2 und daran befindliche Anschweißteile, obere Befestigungsfutter 5, untere Führungsschiene 6, ein und bildet im übrigen das Blatt der Tür 1. Gemäß Fig. 1 weist die Ummantelung 3 im oberen Teil der Tür 1 eine Ausnehmung für ein Fenster auf; in dem unteren, fensterlosen Teil der Tür 1 enthält die Ummantelung 3 die schaumdurchlässige Einlage 7, beispielsweise ein Streckmetallgitter.

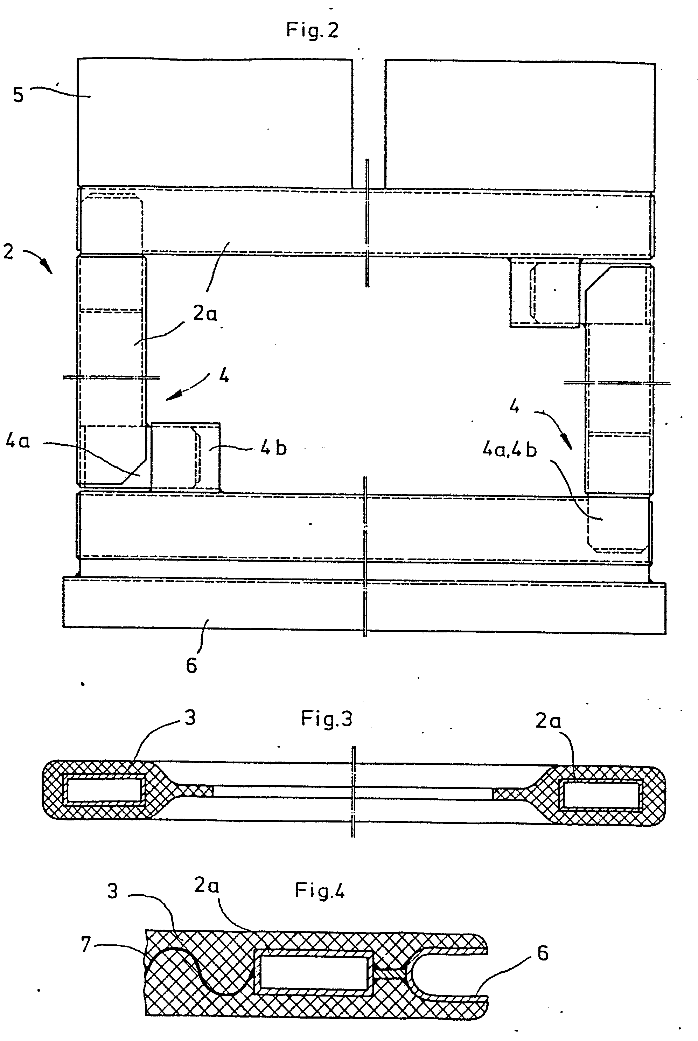

Nach Fig. 2 ist der Verstärkungsrahmen 2 aus vier Elementen 2a, hier Rechteckrohre, gebildet, die über an ihren Enden angebrachte Halterungen 4 verbunden sind.

Diese bestehen aus rechtwinklig zueinander an den seitlichen Elementen 2a angeschweißten Paßstücken 4a, die verschiebbar in an dem oberen und unteren Element 2a angeordnete Aufnahmen 4b eingreifen. Diese Aufnahmen sind durch Ausnehmungen und angeschweißte Rechteckrohrstücke gebildet.

## Patentansprüche

1. Tür (1) aus Kunststoff, insbesondere für Schienen- und Straßenfahrzeuge, die einen im Bereich ihrer Kanten angeordneten, aus metallischen Profilen bestehenden Verstärkungsrahmen (2) und eine diesen Rahmen (2) einschließende, aus geschäumtem Kunststoff erstellte, das Blatt der Tür (1) bildende und alle erforderlichen Ausnehmungen für Fenster, Handgriffe usw. enthaltende Ummantelung (3) aufweist, dadurch gekennzeichnet, daß je zwei benachbarte Elemente (2a) des umlaufend ausgebildeten Verstärkungsrahmens (2) im Sinne eines Dehnungsausgleiches verschiebbar miteinander verbunden sind.

2. Tür nach Anspruch 1, dadurch gekennzeichnet, daß der Verstärkungsrahmen (2) vier jeweils aus einem Rechteckrohr gebildete Elemente (2a) aufweist, an deren Enden miteinander verschiebbar im Eingriff stehende Halterungen (4) angeordnet sind.

3. Tür nach Anspruch 2, dadurch gekennzeichnet, daß die Halterungen (4) aus jeweils an den Enden der beiden seitlichen Elemente (2a) im rechten Winkel zueinander angebrachten Paßstücken (4a) und aus jeweils an den Enden des oberen und des unteren Elementes (2a) des Verstärkungsrahmens (2) entsprechend angeordneten Aufnahmen (4b) für die Paßstücke (4a) bestehen.

4. Tür nach einem der Ansprüche 1 bis 3, dadurch gekennzeichnet, daß der Verstärkungsrahmen (2) mit allen für Anbauteile wie Türlager, Handgriffe usw. erforderlichen Befestigungsfuttern (5) versehen ist.

5. Tür, die als Schiebetür dient, nach einem der Ansprüche 1 bis 4, dadurch gekennzeichnet, daß der Verstärkungsrahmen (2) unten eine Führungsschiene (6) mit U-förmigem Querschnitt aufweist, wobei diese Schiene (6) auf ihren Außenflächen von der Ummantelung (3) bedeckt ist.

6. Tür nach einem der Ansprüche 1 bis 5, die nur in ihrem oberen Bereich mit einem Fenster ausgerüstet ist, dadurch gekennzeichnet, daß der unterhalb der Fensteröffnung liegende Bereich der Ummantelung (3) eine schaumdurchlässige, vorzugsweise metallische Einlage (7) enthält.

## Claims

1. A plastic door (1), especially for rail and road vehicles, which is provided in the region of its borders with a reinforcing frame (2), consisting of metal profiles, and an encasement (3) which encompasses this frame (2), is made foamed plastic, forms the leaf of the door (1) and contains all the necessary recesses for windows, handles etc., characterised in that two adjacent elements (2a) of the surrounding reinforcing frame (2) are in each case removably connected together in the sense of an extension compensation.

2. A door according to claim 1, characterised in that the reinforcing frame (2) is provided with four elements (2a), each of which is formed from a rectangular tube, holders (4) being arranged at the ends of these elements so as to be in removable engagement with one another.

3. A door according to claim 2, characterised in that the holders (4) consist of fitting pieces (4a) in each case arranged at the ends of the two lateral elements (2a) at right angles to one another and of receivers (4b) for the fitting pieces (4a), which receivers are in each case correspondingly arranged at the ends of the upper and lower element (2a) of the reinforcing frame (2).

4. A door according to one of claims 1 to 3, characterised in that the reinforcing frame (2) is provided with all the attachment mountings (5) necessary for attachments such as door bearings, handles etc.

5. A door, serving as a sliding door, according to one of claims 1 to 4, characterised in that the bottom of the reinforcing frame (2) is provided with a guide rail (6) of U-shaped cross section, this rail (6) being covered on its outer surfaces by the encasement (3).

6. A door according to one of claims 1 to 5, which ist only provided with a window in its upper region, characterised in that the region of the encasement (3) disposed below the window opening comprises a foampermeable, preferably metallic insert (7).

## Revendications

1. Porte (1) en matière synthétique, en particulier pour véhicules routiers et véhicules de chemin de fer, comportant un cadre de renforcement (2) constitué en profilés métalliques et disposé dans le domaine de ses bords, et une enveloppe (3) en matière synthétique expansée en mousse, enfermant ce cadre (2), formant le panneau de la porte (1) et comportant tous les évidements nécessaires pour des feêtres, des poignées, etc., porte caractérisée en ce que chaque fois deux éléments voisins (2a) du cadre de renforcement (2) s'étendant sur tout le pourtour, sont reliés entre eux à coulissement dans le sens d'une compensation de dilatation.

2. Porte suivant la revendication 1, caractérisée en ce que le cadre de renforcement (2) comporte quatre éléments (2a) formés chacun par un tube rectangulaire, aux extrémités desquels sont prévus des organes de maintien (4) reliés entre eux à coulissement.

3. Porte suivant la revendication 2, caractérisée en ce que les organes de maintien (4) sont constitués par des pièces d'adaptation (4a) à angle droit entre elles, fixées sur les deux éléments latéraux (2a), et par des pièces de raccordement (4b) correspondants prévus sur les extrémités des éléments (2a) supérieur et inférieur du cadre de renforcement (2).

4. Porte suivant l'une des revendications 1 à 3, caractérisée en ce que le cadre de renforcement (2) est pourvu de toutes les ferrures de fixation (5) nécessaires au montage des accessoires, tels que paliers de porte, poignées, etc.

5. Porte devant servir de porte coulissante, suivant l'une des revendications 1 à 4, caracterisée en ce que le cadre de renforcement (2) comporte à sa partie inférieure un rail de guidage (6) à section en forme de U, ce rail (6) étant recouvert par l'enveloppe (3) sur sa face extérieure.

6. Porte suivant l'une des revendications 1 à 5, qui ne comporte qu'une seule fenêtre dans sa partie supérieure, caractérisée en ce que la partie de l'enveloppe (3) qui se trouve au-dessous de l'ouverture de fenêtre, contient une insertion (7), de préférence métallique, perméable à la matière en mousse.

Fig. 1

Fig. 2

5

2

2a

4

4a

4b

4

4a, 4b

6

Fig. 3

3

2a

Fig. 4

3

2a

7

6